(19) Europäisches Patentamt
European Patent Office
Office européen des brevets

(11) Publication number : **0 657 888 A1**

# EUROPEAN PATENT APPLICATION

(21) Application number : **94309112.4**

(22) Date of filing : **07.12.94**

(51) Int. Cl.[6] : **G11B 27/13,** // G11B27/34

(30) Priority : **08.12.93 KR 2692593**

(43) Date of publication of application :
**14.06.95 Bulletin 95/24**

(84) Designated Contracting States :
**DE FR GB**

(71) Applicant : **GOLDSTAR CO. LTD.**
**20, Yoido-Dong**
**Yongdungpo-Ku**
**Seoul (KR)**

(72) Inventor : **Lee, Sang Yong**
**Joongang Heits Villa A-201,**
**799-10, Bangbae-dong**
**Seocho-ku, Seoul (KR)**

(74) Representative : **Smith, Norman Ian et al**
**F.J. CLEVELAND & COMPANY**
**40-43 Chancery Lane**
**London WC2A 1JQ (GB)**

(54) **Method for detecting remainder of tape.**

(57) The method in which is capable of detecting the remainder of tape a tape cassette in multiple stages in a short time by a simple calculation involves only a simple multiplication and uses simple comparison equations derived without measuring the tape thickness and the total tape running time. The method includes the steps of deriving a take-up reel cycle ($T_t$), a supply reel cycle ($T_s$) and a constant (A) for each operation mode ($A = 2\pi R_0/V$), indicating an information that the remainder of the tape wound on a supply reel hub corresponds to the n-th one of n stages when the sum ($T_s + A$) is more than a predetermined value while indicating an information that the remainder of the tape wound on a take-up reel hub corresponds to the first stage when the sum ($T_s + A$) is not more than the predetermined value, but when the sum ($T_t + A$) is more than the predetermined value, setting a stage value of m ($1 < m < n$) when the sum ($T_t + A$) is not more than the predetermined value, substituting the stage value (m) by "m + 1", determining whether $t_s \cdot \{(n\text{-}m)+1\} \geqq t_t \cdot (m\text{-}1)$, and repeating the substitution step and the step following the substitution step when the determination of $t_s \cdot \{(n\text{-}m)+1\} \geqq t_t \cdot (m\text{-}1)$ has been made at the step (E) while indicating an information that the remainder of the tape corresponds to the m-th stage if not.

FIG.3

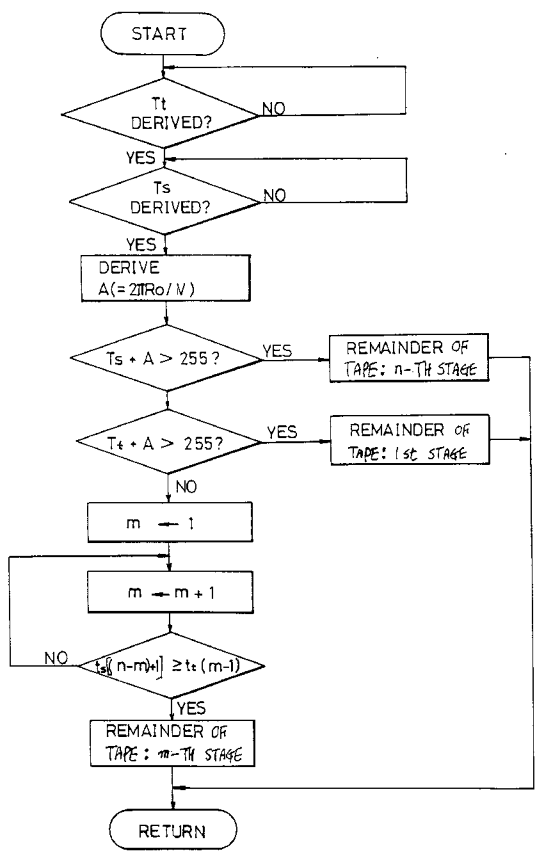


EP 0 657 888 A1

## BACKGROUND OF THE INVENTION

### Field of the Invention

The present invention relates to a method for detecting the remainder of a tape, and more particularly to a method for detecting the remainder of tape of a tape cassette, capable of displaying the remainder of tape in the form of a multiple stage in a short time by a simple calculation using the ratio between the remainder time of tape wound on a take-up reel of the tape cassette and the remainder time of tape wound on a supply reel of the tape cassette.

### Description of the Prior Art

Generally, tape cassettes for VCR of VHS system have different hub radii depending on the kind thereof. However, tape cassettes for VCR of 8mm system have a constant hub radius irrespective of the kind thereof.

Referring to FIG. 1, there is illustrated a cassette deck employed in a conventional recording and reproducing apparatus. As shown in FIG. 1, the cassette deck which is denoted by the reference numeral 1 includes a light emitting element (not shown). When a tape cassette is loaded in the deck 1, the light emitting element is positioned at the center of the top-end light emitting display (LED) hole T-EH of the tape cassette 4. A pair of light receiving elements 3 are disposed at upper ends of both side walls of the cassette deck 1, respectively, to receive light emitted from the light emitting element via a tape T of the tape cassette 4. A drum 2 is disposed at the rear portion of the cassette deck 1 so as to reproduce data recorded on the tape T and record data on the tape T.

When the tape T runs for recording data thereon or reproducing data therefrom, the light emitting element positioned at the top-end LED hole T-EH emits light. The light is projected toward both the light receiving elements 3.

Where a portion of the tape T not coated with an opaque magnetic film is positioned between the light emitting element and an optional one of the light receiving elements 3, the light projected toward the light receiving element 3 is allowed to be incident on the light receiving element 3. As the tape T further runs, a portion of the tape T coated with the opaque magnetic film is positioned between the light emitting element and the light receiving element 3. At this time, the light emitted from the light emitting element is shielded by the opaque portion of tape T, thereby disabling the light to be incident on the light receiving element 3. In such a manner, the leading point of the portion of tape T coated with the magnetic film is recognized.

When the portion of tape T not coated with the magnetic film is positioned between the light emitting element and the light receiving element 3 again after the tape T runs continuously in the same direction, the light from the light emitting element is allowed to be incident on the light receiving element 3 again. Accordingly, the trailing point of the portion of tape T coated with the magnetic film is recognized.

In the case of a tape cassette for VCR of VHS system having a hub radius determined depending on the kind thereof, the remainder of tape is conventionally derived by measuring one cycle of a supply reel of the tape cassette and one cycle of a take-up reel of the tape cassette and then determining the kind of the tape cassette on the basis of the measured cycles. In other words, the remainder of tape is derived using the hub radius determined on the basis of the determined cassette kind.

Tape cassettes for VCR of VHS system are classified into tape cassette for 30 minutes, tape cassette for 60 minutes, tape cassette for 90 minutes and tape cassette for 120 minutes in terms of the recording time. In all the tape cassettes, the thickness L of the magnetic tape is 18.5 μm. The hub radius $R_0$ is 31 mm in cases of tape cassettes of 30 minutes and 60 minutes and 13 mm in cases of tape cassettes of 90 minutes and 120 minutes. In a VCR of VHS system having a tape running velocity V of 33,346 mm/sec and a constant K of 1,440 at the frequency-of 720 Hz generated from a capstan frequency generator in normal recording and reproducing operations, the remainder of tape is determined by the following equation (1):

$$t = \frac{\pi}{V \cdot L}\{(\frac{V \cdot N}{K \cdot \pi})^2 - R^2{}_0\} \quad (1)$$

where,

L: tape thickness;

N: reference number of pulses generated for one revolution of each of the supply reel and the take-up reel;

K: constant; and

$R_0$: hub radius.

The process of deriving the equation (1) will now be described in conjunction with FIGS. 1 and 2.

In the case of FIG. 1, the length of tape T wound off a hub of a supply reel 5 is identical to the length of tape T wound around a hub of a take-up reel 6. Accordingly, the value resulted from a deduction of the area

$A_1$ of a circle defined by the hub of supply reel 5 shown in FIG. 2 from the area A of a circle defined by the tape remaining on the supply reel 5 corresponds to the area resulted from the product of the length of tape to be run by the tape thickness. That is, this can be expressed by the following equation (2):

$$\pi R^2 - \pi R^2_0 = V_t \times L \quad (2)$$

where,

V: running velocity of tape;

t: running time;

R: radius of the circle defined by the tape wound around the supply reel; and

$R_0$: hub radius.

On the other hand, the cycle T of the hub at the hub radius of R is given by the following equation (3):

$$T = 2\pi R/V \quad (3)$$

On the basis of the equations (2) and (3), a relation equation is established between the cycle of the hub of the tape cassette 4 and the running time of the tape wound around the hub. This relation equation can be derived as follows:

First, the following equation (4) is obtained by ordering the equation (3) for R:

$$R = \frac{VT}{2\pi} \quad (4)$$

Then, the equation (4) is substituted for "R" of the equation (2), thereby deriving the following equation (5):

$$t = \frac{VT^2}{4\pi L} - \frac{\pi R^2_0}{VL} \quad (5)$$

"T" of the equation (5) can be substituted by "N/f". "N/f" is just the cycle T because "f" is the reference number of pulses generated from a capstan motor for one second and "N" is the reference number of pulses generated from the capstan motor for one revolution of each of the supply reel and the take-up reel.

By substituting "N/f" for "T" of the equation (5), the following equation (6) is derived:

$$t = \frac{V \cdot N^2}{4\pi L f^2} \quad \frac{\pi R^2_0}{V \cdot L}$$

$$= \frac{\pi}{V \cdot L} \{ ( \frac{V^2 \cdot N^2}{4\pi^2 f^2} ) \} - R^2_0 \quad \ldots\ldots\ldots\ldots \quad (6)$$

In the equation (6), "f" can be substituted by "K/2". This is because the constant K is 1,440 when the frequency generated from the capstan frequency generator is 720 Hz.

When "K/2" is substituted for "K/2" of the equation (6), the equation (1) is derived.

The following Table 1 shows the sum of the running time Tns of the remainder of tape wound on the supply reel and the running time Tnt of the remainder of tape wound on the take-up reel in each of various kinds of tape cassettes. The values shown in Table 1 are those obtained by a calculation using the equation (1) with reference to the hub radius $R_0$ of 13 mm that is of the tape cassette for 120 minutes. As shown in Table 1, the calculated values are different from one another depending on the kind of tape cassette so that they are used as specific constants for a determination about the kind of tape cassette. For the tape cassettes for 30 minutes and 60 minutes, the values shown in Table 1 are different from actual values because they are calculated with reference to the hub radius $R_0$ of 13 mm.

Table 1

| Kind of Tape Cassette | Sum of Remainder Times (Tns + Tnt) |
|---|---|
| 30 min. | 164 min. |
| 60 min. | 194 min. |
| 90 min. | 90 min. |
| 120 min. | 120 min. |

Where a determination about the kind of a tape cassette is to be made, first, amounts of tape respectively wound on the supply reel of the tape cassette and the take-up reel are calculated using the equation (1) with reference to the hub radius $R_0$ of 13 mm that is of the tape cassette for 120 minutes. On the basis of the calculated tape amounts, the remainder time sum is then calculated. If the calculated remainder time sum is not more than 140 minutes, the tape cassette being checked is determined to have the hub radius $R_0$ of 13mm. Since this hub radius corresponds to that used upon calculating the remainder time sum, the calculated remainder time sum is just the actual remainder time sum of the tape cassette being checked. On the other hand, the calculated remainder time sum is more than 140 minutes, the tape cassette being checked is determined to have the hub radius $R_0$ of 31 mm. That is, the tape cassette being checked is one for 60 minutes or 30 minutes. In this case, accordingly, amounts of tape respectively wound on the supply reel of the tape cassette and the take-up reel are calculated again using the equation (1) with reference to the hub radius $R_0$ of 31 mm. On the basis of the calculated tape amounts, the remainder time sum is then calculated.

As mentioned above, the kind of tape cassette can be determined by substituting the measured reference pulse number $N_S$ per one revolution of the supply reel, the measured reference pulse number $N_t$ per one revolution of the take-up reel and the hub radius $R_0$ of the tape cassette for 120 minutes, namely, 13 mm for those of the equation (1) to derive remainder times Tns and Tnt for $N_S$ and $N_t$, summing the derived remainder times Tns and Tnt, and then comparing the resultant value with a predetermined value. In such a manner, remainder times of tape cassettes of various types can be calculated even using a general 4-bit microprocessor.

In this conventional case, however, the calculation is complex because the tape thickness L and the sum of remainder times Tns and Tnt should be derived to calculate the absolute time for the remainder of tape. As a result, the time taken to sense the remainder of tape is lengthened. Moreover, this method requires a program for comparing the sum of remainder times Tns and Tnt with a table stored with data about various remainder times associated with tape cassettes of various types. As a result, the program quantity is increased.

## SUMMARY OF THE INVENTION

Therefore, an object of the invention is to provide a method for detecting the remainder of tape of a tape cassette, capable of displaying the remainder of tape in the form of a multiple stage in a short time by a simple calculation using the ratio between the remainder time of tape wound on a take-up reel of the tape cassette and the remainder time of tape wound on a supply reel of the tape cassette without measuring the tape thickness and the total tape running time.

In accordance with the present invention, this object can be accomplished by providing a method for detecting the remainder of a tape of a tape cassette, comprising the steps of: (A) deriving a take-up reel cycle ($T_t$), a supply reel cycle ($T_S$) and a constant (A) for each operation mode ($A = 2\pi R_0/V$); (B) indicating an information that the remainder of the tape wound on a supply reel hub corresponds to the n-th one of n stages when the sum ($T_S$ + A) of the supply reel cycle ($T_S$) and the constant (A) is more than a predetermined value while indicating an information that the remainder of the tape wound on a take-up reel hub corresponds to the first stage when the sum ($T_S$ + A) is not more than the predetermined value, but when the sum ($T_t$ + A) of the take-up reel cycle ($T_t$) and the constant (A) is more than the predetermined value; (C) setting a stage value of m higher than one and lower than n to be one when the sum ($T_t$ + A) is not more than the predetermined value; (D) substituting the stage value (m) by a value of m + 1; (E) determining whether or not the product of a running time ($t_S$) of the tape wound on the supply reel hub by a predetermined value ((n - m) + 1) is not less than the product of a running time ($t_t$) of the tape wound on the take-up reel hub by a predetermined value (m - 1); and (F) repeating the steps (D) and (E) when the determination of $t_S \cdot \{(n-m)+1\} \geqq t_t \cdot (m-1)$ has been made at the step (E) while indicating an information that the remainder of the tape corresponds to the m-th stage when the determination of $t_S \cdot \{(n-m)+1\} \geqq t_t \cdot (m-1)$ has not been made at the step (E).

## BRIEF DESCRIPTION OF THE DRAWINGS

Other objects and aspects of the invention will become apparent from the following description of embodiments with reference to the accompanying drawings in which:

FIG. 1 is a schematic view illustrating a running condition of a tape of a tape cassette loaded in a conventional recording and reproducing apparatus;

FIG. 2 is a schematic view illustrating a condition of the tape wound on a hub of the tape cassette shown in FIG. 1; and

FIG. 3 is a flow chart illustrating a method for detecting the remainder of a tape in which the present invention is embodied.

## DETAILED DESCRIPTION OF THE PREFERRED EMBODIMENTS

Referring to FIG. 3, there is illustrated a method for detecting the remainder of a tape of a tape cassette in accordance with the present invention.

In accordance with this method, first, a determination is made about whether a take-up reel cycle $T_t$ has been derived. The take-up reel cycle $T_t$ is derived using the equation (3). Where the take-up reel cycle $T_t$ has been determined to be derived, a determination is then made about whether a supply reel cycle $T_S$ has been derived. In similar to the take-up reel cycle $T_t$, the supply reel cycle $T_S$ is derived using the equation (3).

The order of deriving take-up reel cycle $T_t$ and the supply reel cycle $T_S$ may be reversed. Where the supply reel cycle $T_S$ has been determined to be derived, a step of deriving a constant A associated with a sensed tape running velocity is derived.

The constant A is derived using an equation of $A = 2\pi R_0/V$. In the case of a tape cassette for VCR of 8mm type, the hub radius $R_0$ is constant. Also, the velocity V in each operation mode is predetermined. Accordingly, the constant A is the value already derived for each operation mode.

Thereafter, a determination is made whether $T_S + A > 255$. When $T_S + A \leqq 255$, a determination is made whether $T_t + A > 255$. This will be described in more detail.

After deriving the time $t_S$ corresponding to the remainder of tape wound on the supply reel and the time $t_t$ corresponding to the remainder of tape wound on the take-up reel using the equation (5), the ratio between the derived times $t_S$ and $t_t$ is derived. The ratio between the derived times $t_S$ and $t_t$ is expressed by the following equation (7):

$$t_S:t_t = \frac{VT^2_S}{4\pi L} - \frac{\pi R^2_0}{LV} : \frac{VT^2_1}{4\pi L} - \frac{\pi R^2_0}{LV} \quad (7)$$

Since "$\pi R^2_0/LV$" of the equation (7) is constant, it can be substituted by a constant K. Accordingly, the following equation (8) is derived from the equation (7):

$$t_S:t_t = \frac{VT^2_S}{4\pi L} - K : \frac{VT^2_t}{4\pi L} - K \quad (8)$$

Using the constant K, the constant A can be expressed by the following equation (9):

$$A = K\frac{2L}{R_0} \quad (9)$$

When the equation (8) is substituted for "K" of the equation (9), the following equation (10) is derived:

$$t_s:t_t = \frac{VT^2_s}{2\pi R_0} - A : \frac{VT^2_t}{2\pi R_0} - A$$

$$= \frac{T^2_s}{A} - A : \frac{T^2_t}{A} - A$$

$$= (T_s-A)\cdot(T_s+A):(T_t-A)\cdot(T_t+A) \quad \ldots\ldots\ldots \quad (10)$$

Meanwhile, VCRs have various operation modes such as reproducing mode (play), fast forward reproducing mode (cue), fast rearward reproducing mode (rev), fast forward winding mode (ff), rewinding mode (rew) and etc.. Since tape running velocities in the operation modes are different from one another, constants A associated with the operation modes are different from one another.

On the other hand, the cycle of tape checked in the form of a digital value by a microcomputer may be varied depending on the time interval of checking the tape cycle. In this case, a smaller error is generated at a smaller checking time interval. In other words, the error is smaller as the number of checking steps is larger. In the case of a camcorder, a slight error is tolerable when the number of checking steps is up to 5 or 6.

Accordingly, the time interval of checking the tape cycle is appropriately determined, taking into consideration the efficiency of the microcomputer used, the calculation time and the magnitude of the error.

In order to complete both the calculation of $(T_S - A)\cdot(T_S + A)$ and the calculation of $(T_t - A)\cdot(T_t + A)$ by executing a multiplication routine only one time, the maximum values of $(T_S + A)$ and $(T_t + A)$, namely, "$\max(T_S + A)$" and "$\max(T_t + A)$" should be less than one byte, namely, 255.

Meanwhile, the value "max(T + A)" for a certain cycle T at a reference velocity is 11.34 seconds in the case of the tape cassette for 90 minutes having the tape thickness of 13 μm, 12.18 seconds in the case of the tape cassette for 120 minutes having the tape thickness of 10 μm, and 12.36 seconds in the case of the tape cassette for 180 minutes having the tape thickness of 7 μm.

In this regard, the multiplication of one byte by one byte is possible in so far as the value "max(T + A)" corresponding to 12.36 seconds, the largest time is 255. In this case, the maximum reel checking time $t_{reel}$ enabling the 1x1 byte multiplication is given by the following equation (11):

$$t_{reel} = \max(T + A)/255 \quad (11)$$

On the other hand, when the equation (5) is ordered for the cycle T, the following equation (12) is derived:

$$T = \sqrt{\left(txL + \frac{\pi R^2_0}{V}\right)\cdot\left(\frac{4\pi}{V}\right)} \quad (12)$$

When the equation (12) is substituted for "T" of the equation (11), the following equation (13) is derived:

$$t_{reel} = \max\left[\frac{\sqrt{\{txL + (\pi R^2_0/V)\}\,(4\pi/V)} + (2\pi R_0/V)}{255}\right] \quad (13)$$

Where the tape running time t corresponds to the maximum tape running time $t_X$, the following equation (14) is derived from the equation (13):

$$t_{reel} = \max\left[\frac{\sqrt{\{txL + (\pi R^2_0/V)\}\cdot(4\pi/V)} + 2\pi R_0/V}{255}\right] \quad (14)$$

Where the reel checking time $t_{reel}$ is set to be 255 at the end of the n-1-th one of n stages corresponding to n reel checking steps so as to obtain an increased accuracy of the reel checking time $t_{reel}$, the following equation (15) is derived from the equation (14):

$$t_{reel} = \max\left[\frac{\sqrt{\{txL + (\pi R^2_0/V)\}\,(4\pi/V)} + (2\pi R_0/V)}{255} x\left(\frac{n-1}{n}\right)\right] \quad (15)$$

When the determination of $T_S + A > 255$ has been made, the information that the remainder of tape wound on the hub of supply reel corresponds to the n-th stage is displayed on a display.

Where the determination of $T_S + A > 255$ has not been made, a determination is made about whether $T_t + A > 255$. Where $T_t + A > 255$, the information that the remainder of tape wound on the hub of take-up reel corresponds to the first stage is displayed on the display.

Assuming that the tape is fully wound on the hub of supply reel, that is, that the cycle at the n-th reel checking step and the radius of tape wound on the hub of supply reel are $T_1$ and $R_1$, respectively, the cycle $T_1$ corresponds to $2\pi R_1/V$ ($T_1 = 2\pi R_1/V$) in accordance with the equation (3). In this case, the maximum reel checking time $t_{reel}$ corresponds to $\max(T_1+A)/255$ ($t_{reel} = \max(T_1+A)/255$) in accordance with the equation (11).

Consequently, the equation (14) is indicative of the reel checking time calculated in the case where the reel checking time $t_{reel}$ is set to be 255 at the end of the n-th stage. On the other hand, the equation (15) is indicative of the reel checking time calculated in the case where the reel checking time $t_{reel}$ is set to be 255 at the end of the n-1-th stage.

Where the determination of $T_t + A > 255$ has not been made at the step of determining whether $T_t + A > 255$, the remainder of tape wound on the hub of take-up reel corresponds to the m-th stage. Here, "m" is an optional stage value between 1 and n.

Thereafter, the stage value "m" is set to be 1. Subsequently, the stage value "m" is substituted by the value resulted from an addition of 1 to "m", namely, the value "m + 1".

Where the remainder of tape is indicated using n stages as mentioned above, the ratio between $t_S$ and $t_t$ for the take-up reel and the ratio between $t_S$ and $t_t$ for the supply reel are expressed by the following equations (16) and (17), respectively:

$$\frac{t_S}{t_t} < \frac{m}{n-m} \quad (16)$$

$$\frac{t_S}{t_t} \geqq \frac{m-1}{(n-m)+1} \quad (17)$$

The following equation (19) is derived from the equation (18):

$$t_S \cdot \{(n - m) + 1\} \geqq t_t \cdot (m - 1) \quad (18)$$

Accordingly, a determination is made using the equation (18) about whether $t_S \cdot \{(n-m)+1\} \geqq t_t \cdot (m-1)$. When $t_S \cdot \{(n-m)+1\} < t_t \cdot (m-1)$, the procedure returns to the step of substituting "m" by "m + 1" so as to determine whether $t_S \cdot \{(n-m)+1\} \geqq t_t \cdot (m-1)$. When the determination that $t_S \cdot \{(n-m)+1\} \geqq t_t \cdot (m-1)$ is made after repeating the above steps, the information that the remainder of tape wound on the hub of take-up reel corresponds to the m-th stage is displayed on the display.

As apparent from the above description, the present invention provides a method for detecting the remainder of a tape of a tape cassette, capable of sensing the remainder of tape in a short time by a simple calculation using the ratio between the remainder time of tape wound on a take-up reel of the tape cassette and the remainder time of tape wound on a supply reel of the tape cassette and displaying the sensed remainder of tape in the form of a multiple stage. Accordingly, it is possible to reduce the program quantity and the time taken for the calculation. The present invention also provides an effect of an application to the 8mm camcorder or other VCRs requiring no accurate monitoring for the remainder of tape.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A method for detecting the remainder of a tape of a tape cassette, comprising the steps of:
   (A) deriving a take-up reel cycle ($T_t$), a supply reel cycle ($T_S$) and a constant (A) for each operation mode ($A = 2\pi R_0/V$);
   (B) indicating an information that the remainder of the tape wound on a supply reel hub corresponds to the n-th one of n stages when the sum ($T_S$ + A) of the supply reel cycle ($T_S$) and the constant (A) is more than a predetermined value while indicating an information that the remainder of the tape wound on a take-up reel hub corresponds to the first stage when the sum ($T_S$ + A) is not more than the predetermined value, but when the sum ($T_t$ + A) of the take-up reel cycle ($T_t$) and the constant (A) is more than the predetermined value;
   (C) setting a stage value of m higher than one and lower than n to be one when the sum ($T_t$ + A) is not more than the predetermined value;
   (D) substituting the stage value (m) by a value of m + 1;
   (E) determining whether or not the product of a running time ($t_S$) of the tape wound on the supply reel hub by a predetermined value ((n - m) + 1) is not less than the product of a running time ($t_t$) of the tape wound on the take-up reel hub by a predetermined value (m - 1); and
   (F) repeating the steps (D) and (E) when the determination of $t_S \cdot \{(n-m)+1\} \geqq t_t \cdot (m-1)$ has been made at the step (E) while indicating an information that the remainder of the tape corresponds to the m-th stage when the determination of $t_S \cdot \{(n-m)+1\} \geqq t_t \cdot (m-1)$ has not been made at the step (E).

2. A method in accordance with claim 1, wherein the running time ($t_S$) corresponds to the product of the sum ($T_S$ + A) by a value resulted from a deduction of the constant (A) from the supply reel cycle ($T_S$).

3. A method in accordance with claim 1, wherein the running time ($t_t$) corresponds to the product of the sum ($T_t$ + A) by a value resulted from a deduction of the constant (A) from the take-up reel cycle ($T_S$).

FIG. 1
CONVENTIONAL ART

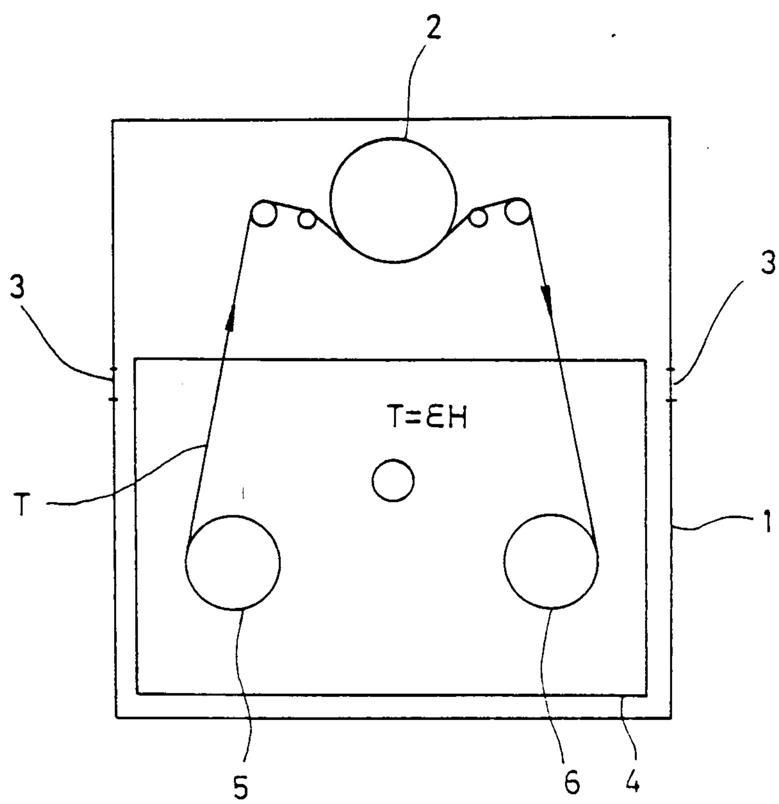


FIG. 2
CONVENTIONAL ART

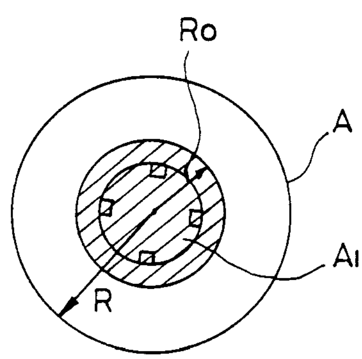

FIG.3

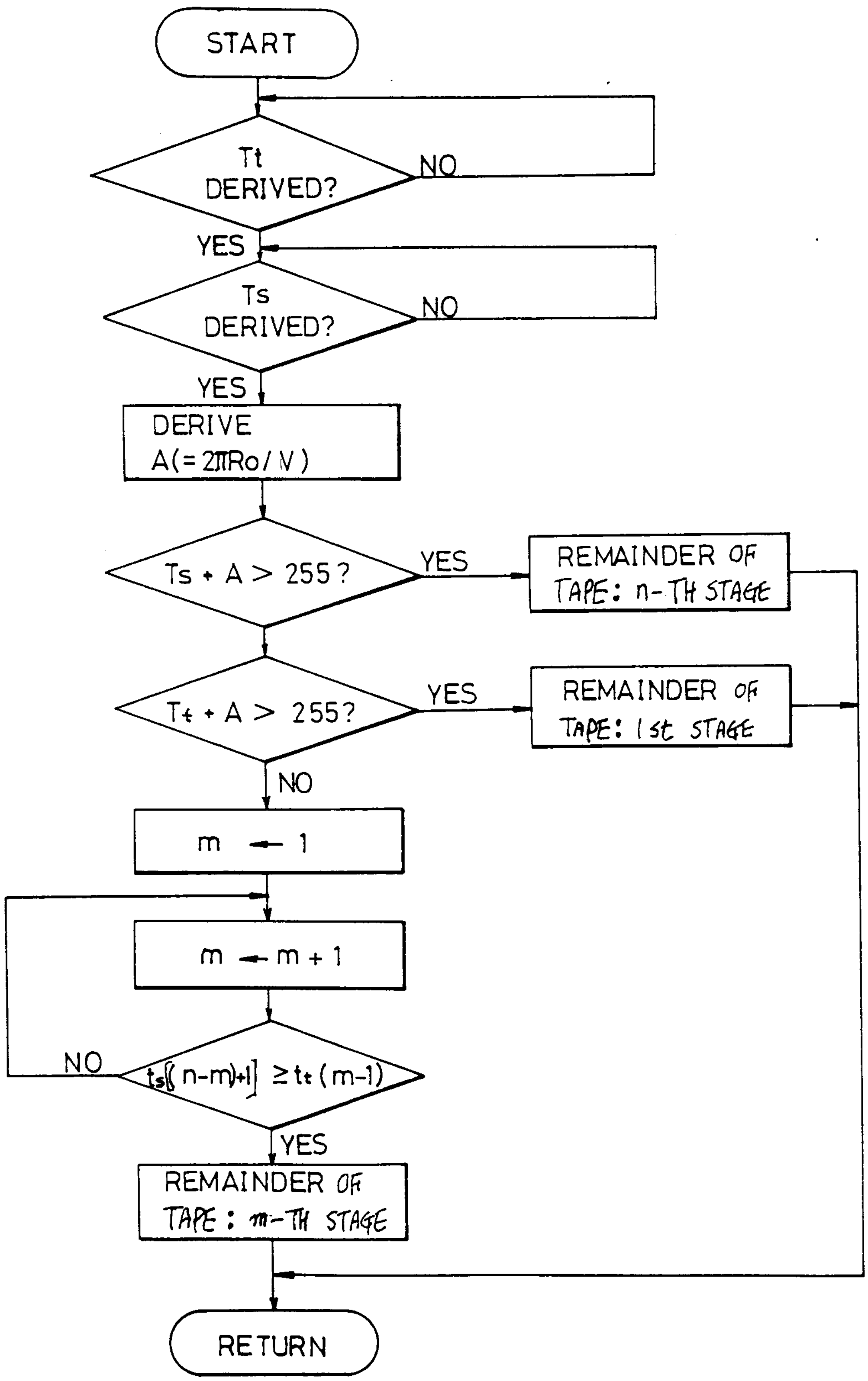
START
Tt DERIVED?
NO
YES
Ts DERIVED?
NO
YES
DERIVE A(=2πRo/V)
Ts + A > 255?
YES
REMAINDER OF TAPE: n-TH STAGE
Tt + A > 255?
YES
REMAINDER OF TAPE: 1st STAGE
NO
m ← 1
m ← m + 1
ts[(n-m)+1] ≥ tt (m-1)
NO
YES
REMAINDER OF TAPE: m-TH STAGE
RETURN

European Patent Office

# EUROPEAN SEARCH REPORT

Application Number
EP 94 30 9112

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB-A-2 211 651 (TOSHIBA K.K.)<br>* the whole document *<br>--- | 1 | G11B27/13<br>//G11B27/34 |
| A | US-A-4 338 645 (MOHRI ET AL.)<br>* the whole document *<br>--- | 1 | |
| A | PATENT ABSTRACTS OF JAPAN<br>vol. 16, no. 301 (P-1379) 3 July 1992<br>& JP-A-04 081 687 (VICTOR CO OF JAPAN LTD.) 16 March 1992<br>* P,A: & US-A-5 321 463 : the whole document *<br>* abstract *<br>--- | 1 | |
| A | WO-A-88 00386 (DEUTSCHE THOMSON-BRANDT GMBH.)<br>* the whole document *<br>--- | 1 | |
| A | EP-A-0 216 260 (STANDARD ELEKTRIK LORENZ A.G.)<br>* the whole document *<br>--- | 1 | TECHNICAL FIELDS SEARCHED (Int.Cl.6) |
| A | EP-A-0 280 217 (K.K.TOSHIBA)<br>* the whole document *<br>----- | 1 | G11B |

The present search report has been drawn up for all claims

| Place of search | Date of completion of the search | Examiner |
|---|---|---|
| THE HAGUE | 9 February 1995 | Daalmans, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)